(19) Europäisches Patentamt

European Patent Office

Office européen des brevets

(11) **EP 1 227 697 A1**

(12) **DEMANDE DE BREVET EUROPEEN**

(43) Date de publication:
**31.07.2002 Bulletin 2002/31**

(51) Int Cl.$^7$: **H04Q 7/38**

(21) Numéro de dépôt: **02290123.5**

(22) Date de dépôt: **18.01.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **29.01.2001 FR 0101460**

(71) Demandeur: **Mitsubishi Electric Information Technology Centre Europe B.V.**
**1101 AG Amsterdam Zuidoost (NL)**

(72) Inventeur: **Jechoux, Bruno, Mitsubishi Electricité**
**35700 Rennes (FR)**

(74) Mandataire: **Maillet, Alain**
**SCP Le Guen & Maillet,**
**5, Place Newquay,**
**B.P. 70250**
**35802 Dinard Cedex (FR)**

(54) **Méthode d'allocation implicite de ressources**

(57)     Méthode d'allocation dynamique de ressources de transmission à une pluralité de communications entre une station de base et une pluralité de terminaux mobiles, chaque ressource étant constituée d'une pluralité de valeurs possibles, un contrôleur d'allocation associé à la station de base, dit contrôleur d'allocation rapide, ne pouvant allouer aux dites communications que certaines combinaisons de valeurs possibles, dites ressources disponibles, ledit contrôleur d'allocation rapide générant une séquence pseudo-aléatoire et allouant à une communication au moins une ressource disponible en fonction d'une valeur de ladite séquence pseudo-aléatoire.

FIG. 5

**Description**

La présente invention concerne de manière générale une méthode d'allocation de ressources de transmission radio pour un système de télécommunication mobile, plus particulièrement pour un système de télécommunication de type UTRA-TDD.

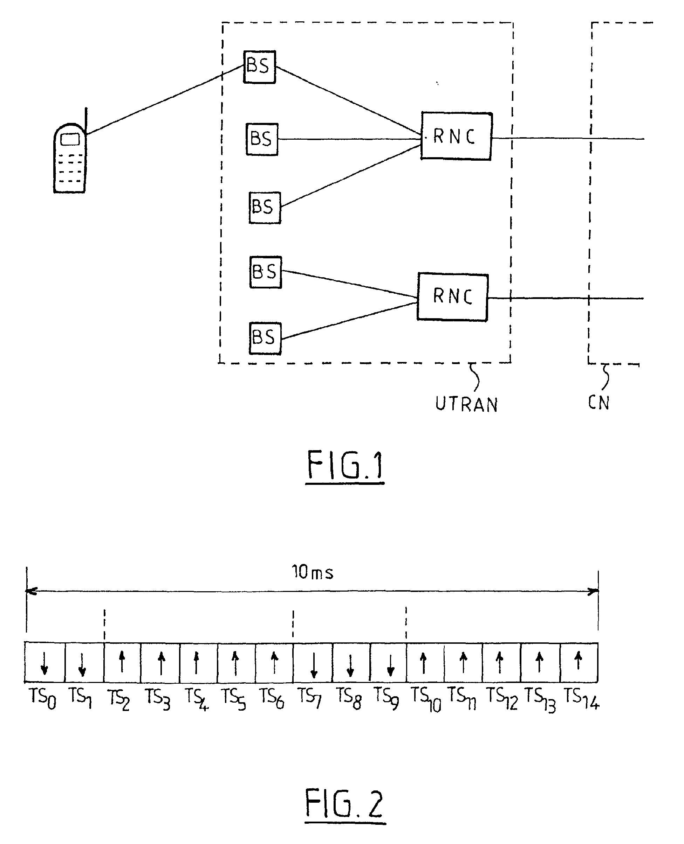

La Fig. 1 représente de manière très schématique le réseau d'accès dans le cadre de l'UMTS, dénommé UTRAN (pour UMTS Terrestrial Radio Access Network). Le réseau d'accès réalise la liaison entre le terminal mobile de l'usager (MS pour Mobile Station) et le réseau d'interconnexion (CN pour Core Network). Il comporte des contrôleurs de réseau d'accès (RNC pour Radio Network Controller) et des stations de base (encore appelées noeuds B), chaque contrôleur RNC pouvant contrôler une pluralité de stations de base. Les liaisons descendantes entre la station de base et les terminaux mobiles qui en dépendent sont séparées des liaisons montantes soit par l'utilisation de fréquences différentes, mode dit duplex en fréquence ou FDD (pour Frequency Division Duplex) soit par des plages temporelles de transmission différentes, mode dit duplex en temps ou TDD (pour Time Division Duplex).

La Fig. 2 représente de manière schématique une trame de transmission dans un système de télécommunication UTRA-TDD (UMTS Terrestrial Radio Access Network in TDD mode). La trame de transmission a une durée de 10ms et est divisée en 15 intervalles de transmission (time slots) notés $TS_0$ à $TS_{14}$. La trame de transmission est également divisée en au moins deux plages temporelles distinctes (partition duplex) allouées respectivement aux liaisons montantes (flèches montantes) et aux liaisons descendantes (flèches descendantes). La séparation entre plages temporelles consécutives est appelée point de commutation. Une trame présente en général plusieurs points de commutation. Afin de réduire les interférences, les stations de base adjacentes à une station de base donnée sont synchrones avec elle et possèdent les mêmes points de commutation. Les communications, montantes ou descendantes, au sein d'une cellule desservie par une station de base sont isolées des communications d'une cellule adjacente grâce à des codes dits codes de brouillage (scrambling codes). Les codes relatifs à des cellules adjacentes sont choisis de manière à présenter un faible niveau d'intercorrélation afin de minimiser les interférences inter-cellulaires. Cependant, en pratique, du fait notamment de la dispersion des retards induite par la propagation multi-trajet, le niveau d'intercorrélation reste encore trop élevé à la réception. Il en résulte que les données transmises à un instant donné au sein d'une cellule peuvent être perturbées par des données transmises au même instant au sein d'une cellule adjacente. Cette perturbation ou interférence inter-cellulaire est variable car elle dépend de nombreux facteurs, entre autres des codes d'étalement (spreading codes), des codes de brouillage, des puissances d'émission et des caractéristiques des différents canaux de transmission des différents usagers. Cependant, le niveau d'interférence varie peu au sein d'un intervalle de transmission d'une trame à l'autre si les connexions et l'allocation des ressources radio ne changent pas.

Pour combattre les interférences inter-cellulaires dans le système UTRA TDD, il est prévu une allocation dynamique des intervalles de transmission ou DCA (Dynamic Channel Allocation), consistant à attribuer dynamiquement des intervalles de transmission et des codes d'accès aux différentes communications. Il a été proposé de diviser cette allocation dynamique en une allocation lente (Slow DCA) et une allocation rapide (Fast DCA). Dans le cadre de cette proposition, l'allocation lente est supervisée par le RNC et vise à arbitrer les conflits de ressources entre stations de base voisines. L'allocation rapide, quant à elle, est prise en charge par la station de base et a pour fonction l'allocation dynamique aux différentes communications des ressources attribuées par l'allocation lente. Pour ce faire, la station de base transmet régulièrement aux terminaux mobiles une requête de mesure. Sur une telle requête, un terminal mobile effectue une mesure du niveau d'interférence et en transmet le résultat à la station de base. La station de base procède alors à une allocation des ressources disponibles en fonction de ces résultats. Cette allocation étant effectuée à une fréquence suffisamment élevée, pour permettre de suivre les variations rapides des niveaux d'interférence, il en résulte un débit de signalisation important (3 messages par cycle d'allocation), qui grève les ressources radio du système.

Le problème à la base de l'invention est de permettre une allocation dynamique des ressources radio ne requérant que peu de signalisation.

Ce problème est résolu par une méthode d'allocation dynamique de ressources de transmission à une pluralité de communications entre une station de base et une pluralité de terminaux mobiles, chaque ressource étant constituée d'une pluralité de valeurs possibles, un contrôleur d'allocation associé à la station de base, dit contrôleur d'allocation rapide, ne pouvant allouer aux dites communications que certaines combinaisons de valeurs possibles, dites ressources disponibles, dans laquelle ledit contrôleur d'allocation rapide génère une séquence pseudo-aléatoire et alloue à une communication au moins une ressource disponible en fonction d'une valeur de ladite séquence pseudo-aléatoire.

Avantageusement, lesdites ressources disponibles sont indexées séquentiellement et une combinaison de ressources disponibles est allouée si son indice est égal à une valeur de ladite séquence pseudo-aléatoire.

Selon un mode de réalisation, des paramètres de génération de ladite séquence aléatoire sont transmis de la station de base aux terminaux mobiles et ladite séquence aléatoire est générée par les terminaux mobiles à partir de desdits paramètres de génération.

Dans le cas où les ressources de transmission d'une pluralité de stations de base adjacentes sont contrôlées par un contrôleur d'allocation lente, les ressources disponibles pour chaque station de base sont déterminées régulièrement, à une première fréquence, par ledit contrôleur d'allocation lente et transmises par ce dernier aux contrôleurs d'allocation rapide associés aux dites stations de base.

L'information fournissant les ressources disponibles au niveau d'une station de base est avantageusement transmise par cette dernière aux terminaux mobiles qu'elle sert.

Selon une variante, chaque contrôleur d'allocation rapide alloue les ressources disponibles au niveau de la station de base auquel il est associé à une seconde fréquence sensiblement plus élevée que ladite première fréquence.

Les ressources comprennent par exemple des intervalles de transmission, des codes d'étalement spectral destinés à séparer les différentes communications et/ou des fréquences de transmissions.

La séquence aléatoire pour l'allocation dynamique est de préférence calculée par :

$$X(1)=x_0$$

$$X(i+1)=\text{mod}((a.X(i)+b-1,2^N)+1$$

où $x_0$ est un mot de $N$ bits constituant le germe de la séquence , $a$-1 est un entier non nul multiple de 4 et $b$ est un nombre impair,

et où $N$ est un entier tel que $2^N$ est supérieur au nombre maximum de ressources disponibles.

Si la station de base et les terminaux mobiles appartenant à un système de télécommunication mobile UTRA-TDD, un premier sous-ensemble de ressources disponibles est dédié aux communications montantes et un second sous-ensemble de ressources disponibles est dédié aux communications descendantes. L'allocation des ressources disponibles du premier sous-ensemble aux communications montantes est alors effectuée de manière indépendante de l'allocation des ressources disponibles du second sous-ensemble aux communications descendantes.

Les paramètres de génération de la séquence aléatoire sont avantageusement transmis sur le canal de contrôle commun BCH.

Les caractéristiques de l'invention mentionnées ci-dessus, ainsi que d'autres, apparaîtront plus clairement à la lecture de la description faite en relation avec les dessins joints, parmi lesquels :

La Fig. 1 représente schématiquement un système un réseau d'accès UTRA-TDD ;
La Fig. 2 représente une trame de transmission utilisée dans un système UTRA-TDD ;
La Fig. 3 représente sous forme de tableau, les ressources possibles et les ressources disponibles au niveau d'une station de base;
La Fig. 4 représente les ressources disponibles, après regroupement ;
La Fig. 5 représente les ressources allouées par l'allocation dynamique rapide parmi les ressources disponibles ;

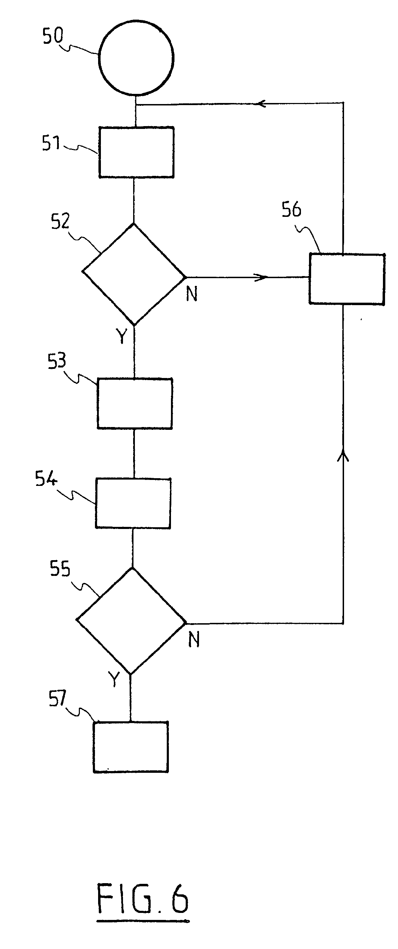

La Fig. 6 représente un organigramme de la méthode d'allocation dynamique de ressources selon l'invention ;
L'idée générale à la base de l'invention est d'utiliser une méthode d'allocation implicite des ressources radio suivant un schéma pseudo-aléatoire.

L'allocation dynamique proposée se fait selon deux niveaux hiérarchisés : un niveau supérieur d'allocation lente et un niveau inférieur d'allocation rapide. Suivant un mode de réalisation, la gestion de l'allocation lente relève du RNC et cette de l'allocation rapide relève des stations de base qui y en dépendent. Selon un autre mode de réalisation, la gestion des deux niveaux d'allocation relève du RNC. De manière générale les deux niveaux d'allocation sont respectivement pris en charge par un contrôleur d'allocation lente ou SDAC (Slow dynamic allocation controller) et un contrôleur d'allocation rapide ou FDAC (Fast dynamic allocation controller) dépendant hiérarchiquement du SDAC, comme on le verra plus loin. Le SDAC a pour fonction de répartir certaines ressources entre plusieurs stations de base adjacentes alors qu'un FDAC est associé à une station de base et gère les ressources de transmission disponibles au niveau de la cellule. Il faut noter SDAC et les FDAC qui en dépendent peuvent faire partie d'un organe de contrôle commun situé au niveau du RNC. Alternativement, seul le SDAC sera situé au niveau du RNC et le FDAC seront situés au niveau des stations de base.

Les mesures d'interférence rapportées par les différents terminaux mobiles à la station de base qui les sert sont transmises au SDAC, soit directement, soit sous la forme d'un paramètre récapitulatif. En fonction de ces informations ainsi que de la charge respective des stations de base, de la qualité de service (QoS) requises par les différentes communications, le SDAC alloue aux différentes cellules des ressources de transmission radio. Celles-ci seront, par exemple dans le cas de l'UTRA-TDD, des codes de brouillage ($SC_k$) $k$=1,..16, des intervalles de transmission ($TS_j$) $j$=1,..,15, des fréquences de transmission ($f_i$), $i$=1..,$I$. De manière plus générale, le SDAC peut gérer $N$ types distincts de ressources ($R_n$), chaque ressource $R_n$ pouvant être considérée comme un ensemble discret de $M_n$ valeurs possibles $R_{nm}$, $m$=1,..,$M_n$.

L'allocation lente effectuée par le SDAC vise à minimiser le niveau moyen d'interférence entre les communications de cellules adjacentes. Les ressources ainsi allouées à une station de base peuvent être représentées comme un sous-ensemble d'éléments d'une matrice à $N$ dimensions. Ces ressources sont gérées par le FDAC associé à la station de base.

En outre, certaines ressources peuvent être librement gérées au niveau du FDAC. Il en va ainsi des codes d'étalement (spreading codes) permettant de séparer les canaux de transmission des différents utilisateurs. Nous noterons $P$ le nombre de types de ressources dont le FDAC a la libre gestion. Ainsi, l'ensemble des valeurs possibles de toutes les ressources au niveau de la station de base pourra être décrit par une matrice, que nous nommerons matrice des ressources, de dimension $N+P$, sachant que $N$ dimensions auront fait déjà l'objet d'une allocation par le SDAC. Par exemple, dans le cas d'un système UTRA-TDD, si une station de base a pour ressources les intervalles de transmission et les codes d'étalement, la matrice serait de dimension 2 et de taille 15x16. Bien entendu, si l'on utilisait comme ressource supplémentaire la fréquence de transmission, la matrice serait de dimension 3.

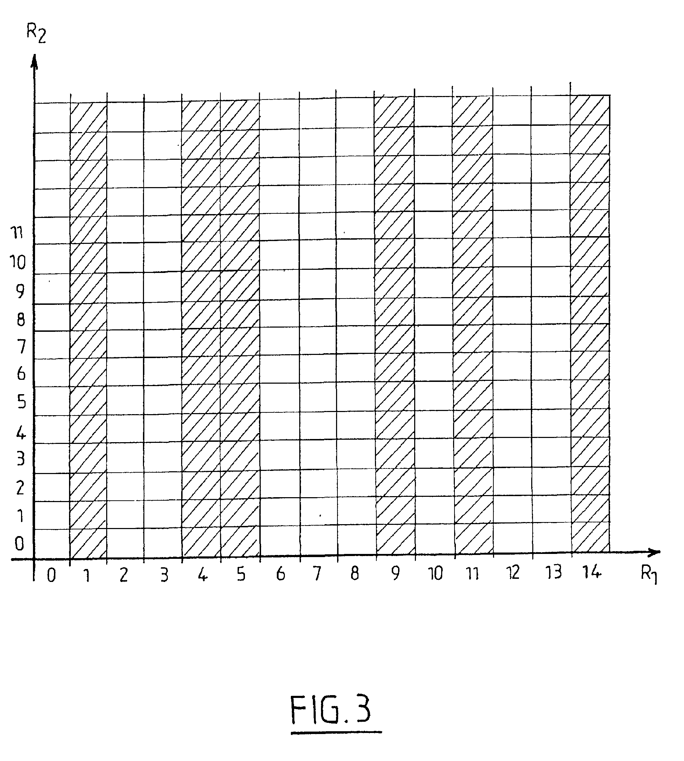

On a représenté en Fig. 3 une telle matrice de ressources de dimension 2 dans laquelle la première ressource $R_1$ a déjà fait l'objet d'une allocation lente et la seconde ressource $R_2$ est librement gérée par le FDAC. L'ensemble des ressources disponibles au niveau de la station de base, gérées par le FDAC, a été représenté par les cases non hachurées. Pour fixer les idées, on supposera que l'on se place dans le contexte d'un système UTRA-TDD, que la ressource $R_1$ est l'intervalle de transmission et que la ressource $R_2$ est le code d'étalement, un seul code de brouillage et une seule fréquence de transmission ayant été alloués par le SDAC. Le FDAC peut utiliser l'ensemble des ressources disponibles pour les communications au sein de la cellule à laquelle il est associé. Cet ensemble est en fait divisé en un premier sous-ensemble relatif aux communications montantes et un second sous-ensemble relatif aux communications descendantes. Dans un système UTRA-TDD, puisque les mêmes fréquences et les mêmes codes sont utilisés sur les liaisons montantes et les liaisons descendantes, on procède à une allocation dynamique séparée pour le premier sous-ensemble et le second sous-ensemble.

Il est proposé selon l'invention d'effectuer une allocation rapide des ressources disponibles au niveau de la station de base selon un schéma pseudo-aléatoire dont les germes sont connus des terminaux mobiles. Ainsi, l'on obtient une redistribution pseudo-aléatoire des ressources allouées au sein de l'ensemble des ressources disponibles.

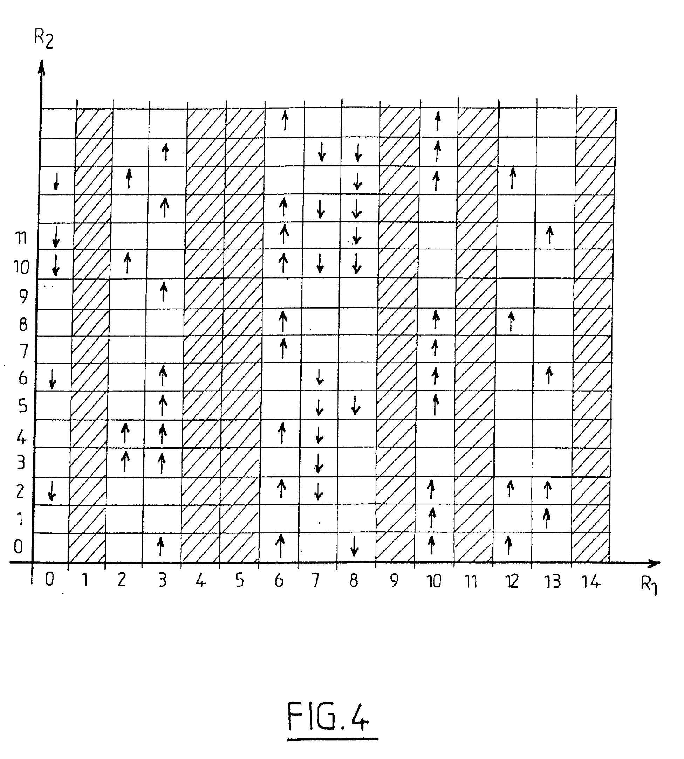

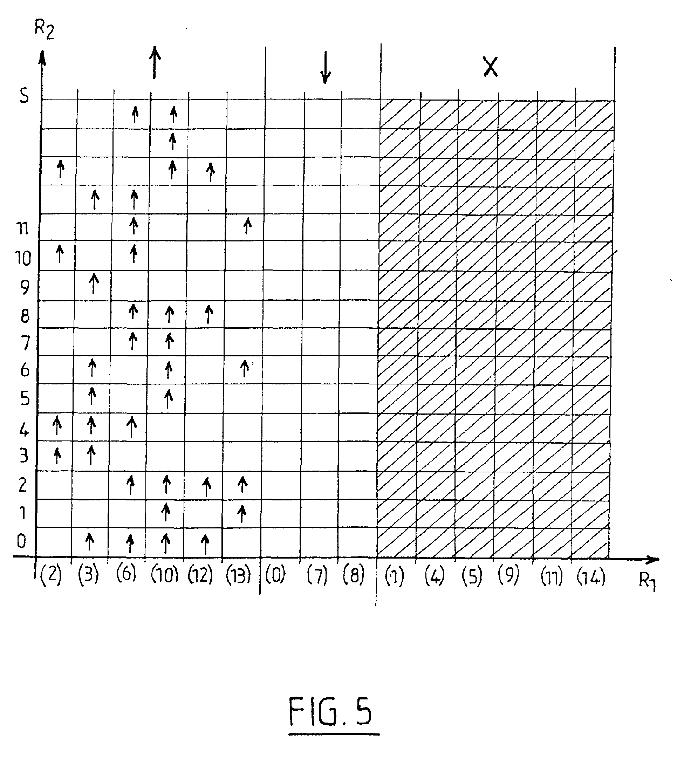

La Fig. 4 représente l'allocation rapide résultant des valeurs d'une séquence aléatoire. Les cases hachurées représentent les valeurs indisponibles des ressources. Les flèches montantes et descendantes figurent respectivement les liaisons montantes et descendantes. $R_2$ étant une ressource librement gérée par le FDAC associé à la station de base, nous pouvons grouper les ressources disponibles pour les liaisons montantes d'une part et pour les liaisons descendantes, d'autre part, de manière connexe, comme indiqué en Fig. 5. Les indices figurant entre parenthèses sont les indices d'origine des intervalles de transmission.

Nous considérerons seulement l'allocation dynamique au sein du sous-ensemble des liaisons montantes, l'allocation au sein du sous-ensemble des liaisons descendantes étant effectuée selon le même principe.

Supposons maintenant, après regroupement connexe, que les valeurs disponibles de $R_1$ soient indicées par $j$=1,..,$J$ et les valeurs disponibles de $R_2$ soient indicées par $s$=1,..,$S$. Nous noterons $T=J.S$ le nombre total de valeurs disponibles et $A$ le nombre de valeurs à allouer selon l'allocation dynamique rapide.

Posons $r=(s-1).J+j$. L'indice $r$ est un indice de balayage de l'ensemble des ressources disponibles.

Considérons une séquence pseudo-aléatoire de longueur $2^N$-1 supérieure (de préférence nettement supérieure) à $T$ et constituée de mots de $N$ bits.

Une telle séquence pourra avantageusement être générée par récurrence de la manière suivante :

$$X(1)=x_0$$
$$X(i+1)=\mathrm{mod}((a.X(i)+b-1,2^N)+1 \tag{1}$$

où $x_0$ est un mot de $N$ bits constituant le germe de la séquence , $a$-1 est un entier non nul multiple de 4 et $b$ est un nombre impair.

L'allocation rapide des ressources au niveau du FDAC se fait alors selon l'organigramme représenté en Fig. 5. Nous noterons $q$ un indice décrivant le nombre courant de ressources allouées.

En (50) on initialise les indices $i$ et $q$ par : $i$=1, $q$=1 ;

En (51) on calcule la valeur de $X(i)$.

En (52) on teste si $X(i) \leq T$.

Si c'est le cas, la valeur $r=X(i)$ est allouée en (53), c'est-à-dire que le couple ($j$,$s$) de valeurs de ressources $R_1$, $R_2$

indicé par l'indice de balayage $X(i)$ est alloué.

On incrémente alors en (54) l'indice d'allocation : $q=q+1$.

On teste en (55) si $q>A$.

Si ce n'est pas le cas, on incrémente en (56) l'indice $i$ : $i=i+1$ et l'on retourne à l'étape (51) de calcul de $X(i)$.

Si le test (52) est négatif, c'est que la valeur de la séquence pseudo-aléatoire est sortie de l'ensemble des valeurs disponibles. On passe alors à la valeur suivante en allant en (56).

Si le test en (55) est positif, c'est que la procédure d'allocation est terminée (57) puisque toutes les valeurs à allouer l'ont effectivement été.

Nous avons supposé ci-dessus que $R_2$ était une ressource librement gérée par le FDAC. Si ce n'est pas le cas, pour une valeur de $R_1$ donnée, seules certaines valeurs de $R_2$ peuvent être disponibles. L'algorithme ci-dessus doit alors être modifié de manière à inclure un test de disponibilité entre les étapes (52) et (53). Si la ressource d'indice $X(i)$ est indisponible, on incrémente $i$ en (56) sans procéder à l'allocation et l'on calcule la valeur de $X(i)$ correspondante.

Des séquences autres que celle définie en (1) peuvent être envisagées dans la mesure où elles assurent un brassage efficace des ressources disponibles. Dans le cas d'un système UTRA-TDD par exemple, il importe d'assurer dans la mesure du possible que, si deux codes ont été alloués au sein d'un même intervalle de transmission, ils se retrouvent alloués à des intervalles distincts à l'étape d'allocation suivante.

La matrice d'allocation lente est transmise via la station de base aux terminaux mobiles à chaque cycle d'allocation du SDAC. Le germe ($X_0$) est également transmis à faible fréquence, via la station de base aux terminaux mobiles qu'elle dessert, par exemple à la fréquence d'allocation lente. Les constantes $a$ et $b$ sont des valeurs prédéterminées du système connues des terminaux mobiles. Chaque terminal peut donc générer la même séquence aléatoire que celle générée au niveau du FDAC. Dès lors, si la station de base reporte au FDAC un niveau d'interférence trop important, ce dernier pourra faire transmettre par la station de base un ordre de changement d'allocation sur le canal de contrôle commun BCH (Broadcast Channel) pour que tous les terminaux mobiles prennent en compte la nouvelle allocation selon la nouvelle valeur de $X$ donnée par (1). De même, si une station mobile détecte un niveau d'interférence trop élevé, il le signale via la station de base au FDAC qui décide alors de procéder ou non à une nouvelle allocation en opérant comme précédemment. Dans tous les cas, l'allocation dynamique se fait sans avoir à transmettre explicitement sur les liaisons radio les valeurs des nouvelles ressources allouées.

## Revendications

**1.**　Méthode d'allocation dynamique de ressources de transmission à une pluralité de communications entre une station de base et une pluralité de terminaux mobiles, chaque ressource étant constituée d'une pluralité de valeurs possibles, un contrôleur d'allocation associé à la station de base, dit contrôleur d'allocation rapide, ne pouvant allouer aux dites communications que certaines combinaisons de valeurs possibles, dites ressources disponibles, **caractérisée en ce que** ledit contrôleur d'allocation rapide génère une séquence pseudo-aléatoire et alloue à une communication au moins une ressource disponible en fonction d'une valeur de ladite séquence pseudo-aléatoire.

**2.**　Méthode d'allocation dynamique de ressources selon la revendication 1, **caractérisée en ce que** lesdites ressources disponibles sont indexées séquentiellement et qu'une combinaison de ressources disponibles est allouée si son indice est égal à une valeur de ladite séquence pseudo-aléatoire.

**3.**　Méthode d'allocation dynamique de ressources selon la revendication 1 ou 2, **caractérisée en ce que** des paramètres de génération de ladite séquence aléatoire sont transmis de la station de base aux terminaux mobiles et que ladite séquence aléatoire est générée par les terminaux mobiles à partir de desdits paramètres de génération.

**4.**　Méthode d'allocation dynamique de ressources selon l'une des revendications précédentes, **caractérisée en ce que**, les ressources de transmission d'une pluralité de stations de base adjacentes étant contrôlée par un contrôleur d'allocation lente, les ressources disponibles pour chaque station de base sont déterminées régulièrement, à une première fréquence, par ledit contrôleur d'allocation lente et transmises par ce dernier aux contrôleurs d'allocation rapides associés aux dites stations de base.

**5.**　Méthode d'allocation dynamique selon la revendication 4, **caractérisée en ce qu'**une information fournissant les ressources disponibles au niveau d'une station de base est transmise par cette dernière aux terminaux mobiles qu'elle sert.

**6.**　Méthode d'allocation dynamique de ressources selon la revendication 4 ou 5, **caractérisée en ce que** chaque contrôleur d'allocation rapide alloue les ressources disponibles au niveau de la station de base auquel il est associé à une seconde fréquence sensiblement plus élevée que ladite première fréquence.

7. Méthode d'allocation dynamique selon l'une des revendications précédentes, **caractérisée en ce que** les ressources comprennent des intervalles de transmission, des codes d'étalement spectral destinés à séparer les différentes communications et/ou des fréquences de transmissions.

8. Méthode d'allocation dynamique selon l'une des revendications précédentes, **caractérisée en ce que** la séquence aléatoire est calculée par :

$$X(1)=x_0$$

$$X(i+1)=\mathrm{mod}((a.X(i)+b-1,2^N)+1$$

où $x_0$ est un mot de N bits constituant le germe de la séquence , $a$-1 est un entier non nul multiple de 4 et $b$ est un nombre impair,
et où $N$ est un entier tel que $2^N$ est supérieur au nombre maximum de ressources disponibles.

9. Méthode d'allocation dynamique selon la revendication 7 ou 8, **caractérisée en ce que**, la station de base et les terminaux mobiles appartenant à un système de télécommunication mobile UTRA-TDD, un premier sous-ensemble de ressources disponibles est dédié aux communications montantes et un second sous-ensemble de ressources disponibles est dédié aux communications descendantes, et que l'allocation des ressources disponibles du premier sous-ensemble aux communications montantes est effectuée de manière indépendante de l'allocation des ressources disponibles du second sous-ensemble aux communications descendantes.

10. Méthode d'allocation dynamique selon les revendications 3 et 9, **caractérisée en ce que** les paramètres de génération de la séquence aléatoire sont transmis sur le canal de contrôle commun BCH.

FIG.1

FIG.2

FIG.3

FIG.4

FIG. 5

# FIG.6

EP 1 227 697 A1

Office européen des brevets  RAPPORT DE RECHERCHE EUROPEENNE

Numéro de la demande
EP 02 29 0123

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | ALMGREN ET AL: "Adaptive channel allocation in TACS" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13 novembre 1995 (1995-11-13), pages 1517-1521, XP010164474 ISBN: 0-7803-2509-5 * page 1517, ligne 1 - page 1518, ligne 95 * | 1,2,4,5 | H04Q7/38 |
| Y | "PSEUDORANDOM ROTATION OF SLOT ASSIGNMENTS IN RADIO TDMA SYSTEMS" IBM TECHNICAL DISCLOSURE BULLETIN, IBM CORP. NEW YORK, US, vol. 39, no. 1, 1996, page 353 XP000556428 ISSN: 0018-8689 * voir citation en entier * | 1,2,4,5 | |
| A | EP 1 047 278 A (LUCENT) 25 octobre 2000 (2000-10-25) * page 4, colonne 5, ligne 17 - page 6, colonne 10, ligne 11; figures * | 1-10 | DOMAINES TECHNIQUES RECHERCHES (Int.Cl.7) H04Q |
| A | TONGUZ ET AL: "A novel channel assignment to reduce intermodulation distortion in PCS" VEHICULAR TECHNOLOGY CONFERENCE, 1997, IEEE 47TH PHOENIX, AZ, USA 4-7 MAY 1997, NEW YORK, NY, USA,IEEE, US, 4 mai 1997 (1997-05-04), pages 1659-1663, XP010229049 ISBN: 0-7803-3659-3 * voir citation en entier * | 1-5 | |

-/--

Le présent rapport a été établi pour toutes les revendications

| Lieu de la recherche | Date d'achèvement de la recherche | Examinateur |
|---|---|---|
| LA HAYE | 8 mai 2002 | Geoghegan, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

12

**Office européen des brevets**

**RAPPORT DE RECHERCHE EUROPEENNE**

Numéro de la demande

EP 02 29 0123

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 199 15 031 A (ERICSSON) 11 novembre 1999 (1999-11-11) * colonne 6, ligne 3 - colonne 13, ligne 63; figures * | 1,2 | |
| A | EP 0 069 477 A (MARCONI) 12 janvier 1983 (1983-01-12) * page 5, ligne 1 - page 11, ligne 20; figures * | 1 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 8 mai 2002 | Geoghegan, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 02 29 0123

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

08-05-2002

| Document brevet cité au rapport de recherche | Date de publication | Membre(s) de la famille de brevet(s) | Date de publication |
|---|---|---|---|
| EP  1047278   A | 25-10-2000 | AU     2890300  A<br>BR     0001882  A<br>CA     2305104  A1<br>CN     1283052  A<br>EP     1047278  A2<br>JP  2000333243  A | 26-10-2000<br>31-10-2000<br>22-10-2000<br>07-02-2001<br>25-10-2000<br>30-11-2000 |
| DE  19915031  A | 11-11-1999 | US     6112094  A<br>CN     1234710  A<br>DE    19915031  A1<br>GB     2337669  A | 29-08-2000<br>10-11-1999<br>11-11-1999<br>24-11-1999 |
| EP  69477     A | 12-01-1983 | AT       11353  T<br>DE     3261937  D1<br>DK      275082  A  ,B,<br>EP     0069477  A1<br>ES      513261  D0<br>ES     8304392  A1<br>FI      822209  A  ,B,<br>GB     2101847  A  ,B<br>IE       53125  B1<br>NO      822040  A  ,B,<br>US     4476566  A<br>YU      133182  A1 | 15-02-1985<br>28-02-1985<br>20-12-1982<br>12-01-1983<br>16-03-1983<br>16-05-1983<br>20-12-1982<br>19-01-1983<br>06-07-1988<br>20-12-1982<br>09-10-1984<br>30-04-1985 |

EPO FORM P0460